# EUROPEAN PATENT SPECIFICATION

(11) **EP 1 852 775 B1**
(45) Date of publication and mention of the grant of the patent: **08.08.2012**
(21) Application number: 07106398.6
(22) Date of filing: 18.04.2007
(51) Int. Cl.: G06F 3/06

(54) **Method and apparatus for updating a sequential file**
Verfahren und Vorrichtung zum Verarbeiten einer sequentiellen Datei
Procédé et appareil pour le traitement d'un fichier séquentiel

(30) Priority: 03.05.2006 FI 20060427
(43) Date of publication of application: 07.11.2007
(73) Proprietor: Tellabs Oy, 02630 Espoo (FI)
(72) Inventor: Hallivuori, Matti, FI-02180, Espoo (FI)
(74) Representative: Brax, Matti Juhani

(56) References cited:
- JP-A- 2001 014 196
- US-A1- 2005 273 547
- US-A1- 2006 059 326
- "Adobe Portable Document Format Version 1.3"[Online] July 2000 (2000-07), XP002509879 ISBN: 0-201-61588-6 Retrieved from the Internet: URL:http://www.adobe.com/devnet/pdf/pdfs/P DFReference13.pdf> [retrieved on 2009-01-12]

## Description

### Field of the invention

The invention relates to a method for updating a sequential file stored in a block-type memory device. The invention also relates to an apparatus for updating a sequential file stored in a block-type memory device.

### Background of the invention

Sequential files are files that are updated by additions attached at the end of the file. A sequential file is for example a diary or log file, at the end of which there are added notes of events in the chronological order. In file systems, files include metadata that refers to facts associated with the data contained by the file, below called payload data. Metadata can express for example those address spaces in the memory device where the payload data can be found, check sums associated with error detection and/or other error indicators, the time of last update of the file, conditions on which the payload data is allowed to be read and/or changed, as well as the file size and/or other structural information about the file.

It is typical of block-type memory devices that the processing of the data stored therein or the data that should be stored therein is carried out memory block by memory block. In a block-type memory device, a single memory block represents the memory capacity of a given share of the address space in said memory device. Block-type memory devices are for example flash-type microcircuit memories and magnetic discs. Repeated writing of new data in memory blocks wears a block-type memory device. A single memory block in a memory device only endures a limited number of write operations. In other words, a memory block is worn, when the write operations are repeated sufficiently often. In case even one memory block in a memory device is worn out, generally the whole memory device, such as a flash-type microcircuit memory or magnetic disc, must be replaced. In addition, write operations often repeated in connection with for instance flash-type microcircuit memory devices reduce the number of available memory blocks. In a flash-type microcircuit, any byte in a memory block can be written and read irrespective of other bytes of said memory block. When a byte or bit is set, it cannot be changed until the whole memory block is emptied. The emptying of the memory block is a remarkably slower operation than the reading of the data from the memory block. In case a change need be made in data contained in a given memory block, said memory block must first be emptied, whereafter the changed data can be written. The resulting speed problem can be solved so that the changed data is written in another, already emptied memory block, in which case the earlier used memory block only needs to be emptied after the file update. However, repeated emptying and writing operations result in that the number of memory blocks that are being emptied or waiting for emptying at any given moment is large, which cuts down the number of the available memory blocks.

### Prior art

In prior art file control systems, the metadata associated with the sequential file is located in a memory block that is either completely or partly reserved for said metadata. As a result, a write operation must be directed to the memory device in two different memory blocks, when new payload data is added to the sequential file, for example when a new diary entry is added in the diary file:
- in the memory block containing the ending location of the earlier written payload data, and
- in the memory block containing metadata.

In the present document, the ending location of the payload data means the data that is last added in said payload.

Consequently, the problem with the prior art arrangement is that one sequential file update operation creates a need to perform write operations in two memory blocks. As was already mentioned earlier in this document, the write operations result in the wearing of the memory device and in a reduction of available memory blocks.

Publication US7127472 discloses a data processing device that first reads directory data provided for each directory by a file management system which manages files using a directory structure. When meta-data to be attached to the directory data is written in a pre-determined format, the device appends the metadata to the end of the read directory data, and outputs the entirety of the data obtained thereby as a directory data file. By appending the meta-data to the end of the directory data, meta-data can be registered by directory with respect to existing data managed by the directory, without affecting existing applications. This technical solution is, however, related to logical file structures but not to processing a sequential file stored in a block-type memory device. Hence, the disclosure of US7127472 does not solve the above-presented technical problem related to the need to perform write operations in two memory blocks of the block-type memory device in conjunction with one sequential file update.

Publication US2006/0059326 discloses a technical solution in which metadata related to payload data is stored in a block-type memory device in a distributed manner to several blocks along with the payload data. Due to the distributed storing of the metadata, this kind of arrangement does not solve the above-presented technical problem related to a sequential file stored in a block-type memory device.

Publication "Adobe Portable Format version 1.3"[Online] July 2000 (2000-07). XP002509879 ISBN: 0-201-61588-6 (retrievable from the Internet: URL: http://www.adobe.com/devnet/pdf/pdfs/P DFReference13.pdf) discloses a logical file structure of a PDF-file (Permanent Document Format) for efficient random access and incremental update. This technical solution is, however, related to logical file structures but not to processing a sequential file stored in a block-type memory device. Hence, the disclosure of the said publication does not solve the above-presented technical problem related to the need to perform write operations in two memory blocks of the block-type memory device in conjunction with one sequential file update.

### Summary of the invention

The invention relates to a method for updating a sequential file stored in a block-type memory device, by which method the limitations and drawbacks associated with the prior art can be eliminated or alleviated. The invention also relates to an apparatus meant for updating a sequential file stored in a block-type memory device, by which apparatus the limitations and drawbacks associated with the prior art can be eliminated or alleviated. The invention also relates to a computer program designed for updating a sequential file stored in a block-type memory device, by which program the limitations and drawbacks associated with the prior art can be eliminated or alleviated.

In the present invention, it has surprisingly been found out that by placing the metadata associated with the sequential file in that memory block of the block-type memory device that contains an ending location of the payload data, the write operation associated with updating said sequential file needs in nearly all situations to be directed only to one memory block of the memory device, said memory block being the one containing the ending location of the payload data. The update is carried out so that the new payload data is added in succession to the ending location of the payload data preceding the update, and the new metadata is added in succession after the added payload data.

The write operation must be directed to two memory blocks only in those rare occasions where the payload data to be added would not - in the situation preceding the update - fit in the available free space of the memory block containing the ending location of the payload data. In the above description it is assumed that the quantity of the metadata in bytes is not changed in connection with the update. Let us assume, for the sake of example, that the size of the memory block is four kilobytes, and the payload data to be added is in average 100 bytes. Now the probability for a situation where the write operation should be directed to two memory blocks is roughly 2.5 %.

The following advantages are achieved by means of the invention:
- the working life of a block-type memory device is extended, because the number of write operations directed to the memory blocks is practically cut to the half in comparison with the prior art arrangement,
- the wearing of the writer head used in connection with the magnetic disc memory is slower than in the prior art arrangement, because the number of the writer head transfers is practically cut to the half in comparison with the prior art arrangement, and
- the number of the available memory blocks in a flash-type memory device is higher than in the arrangement of the prior art, because the number of memory blocks that are being emptied or are waiting to be emptied at a given moment of observation is smaller than in the arrangement according to the prior art.

A method, an apparatus, and a computer program according to the present invention are characterized by what is set forth in the characterizing parts of the accompanying independent claims directed to the method, to the apparatus, and to the computer program, respectively.

Various embodiments of the invention are characterized by what is set forth in the dependent claims.

### Brief description of the drawings

The invention is described in more detail below, with reference to preferred embodiments illustrated by way of example and to the appended drawings, where
Figure 1 illustrates in an exemplary situation the location of metadata in the memory space of a block-type memory device in connection with a method according to the invention,
Figures 2a and 2b illustrate in a diagram in principle the update of a sequential file stored in a block-type memory device in a method according to an embodiment of the invention,
Figures 3a and 3b illustrate in a diagram in principle the update of a sequential file stored in a block-type memory device in a method according to an embodiment of the invention,
Figures 4a and 4b illustrate in diagrams in principle the update of a sequential file stored in a block-type memory device in methods according to an embodiment of the invention, and
Figure 5 illustrates an apparatus according to an embodiment of the invention for processing a sequential file.

### Detailed description of the embodiments of the invention

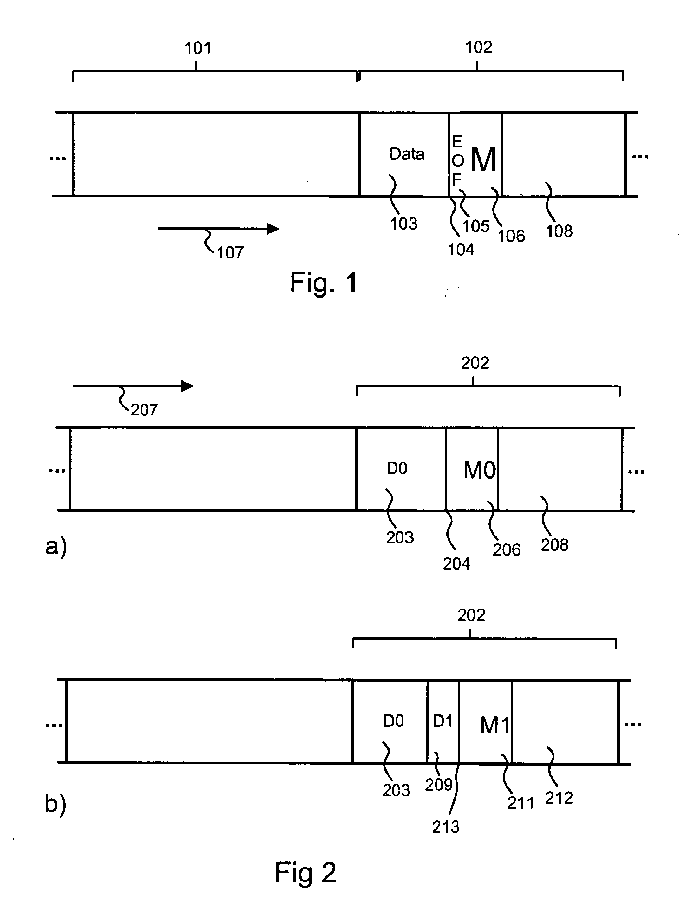

Figure 1 illustrates in an exemplary situation the location of metadata in the memory space of a block-type memory device in connection with a method according to the invention. The arrow 107 indicates the direction of growth of the memory address. The references 101 and 102 represent memory blocks. The memory block 102 contains the ending location 104 of the payload data (Data) 103 included in said sequential file. The payload data 103 represents only that share of the payload data of the sequential file that is contained in the memory block 102. Also other memory blocks may contain payload data, which is not illustrated in figure 1. The ending location 104 is followed by metadata (M) 106. The area of the memory space 108 can be free.

In connection with a method according to an embodiment of the invention, the metadata 106 contains an end of file marker (EOF) 105. Owing to the end of file marker, the ending location of the payload data 104 can be searched without an accurate ending location address data, for instance by a linear search. Said ending location can be found in an updated sequential file, if there is known an address associated with the sequential file, from which the linear search can be started - for instance the address of a respective ending location in the original sequential file, or the address of the start of file location of the sequential file. A linear ending location search can be carried out for example when the apparatus is turned on, whereafter the found ending location address can be stored for instance in the working or temporary memory of the processor. In that case the new ending location address that was changed in the update need not be stored for instance in the block-type memory device under observation, so that said changed ending location address should be directly readable when starting the apparatus.

Figures 2a and 2b illustrate, as a diagram in principle, the updating of a sequential file stored in a block-type memory device in a method according to an embodiment of the invention. Figure 2a illustrates the situation before the update. The arrow 207 indicates the direction of growth of the memory address. The memory block 202 contains the ending location 204 of the payload data (D0) 203 in said sequential file. The ending location 204 is followed by metadata (M0) 206 corresponding to the situation prior to the update. The area of memory space 208 can be free.

Figure 2b illustrates the situation after the update. The sequential file is updated by writing in the memory block 202 the payload data (D1) 209 to be added in the sequential file in succession to the preceding payload data 203, and the metadata (M1) 211 associated with the updated sequential file in succession to the added payload data 209. The area of memory space 212 can be free. In the situation illustrated by Figure 2b, the ending of the payload data is in location 213.

In case the free area of the memory space 208 is not sufficient for the payload data 209 to be added, at least one more memory block must be reserved for saving the updated sequential file.

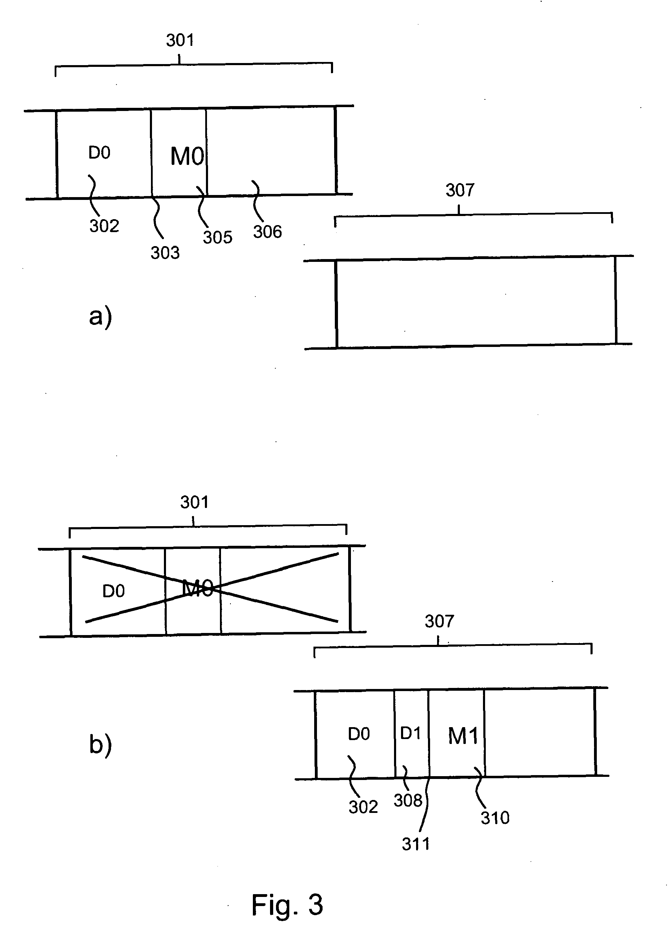

Figures 3a and 3b illustrate in a diagram in principle the updating of a sequential file stored in a block-type memory device in a method according to an embodiment of the invention. The embodiment illustrated in Figures 3a and 3b is particularly suitable for a flash-type microcircuit memory, where a single byte of a given memory block can be written and read irrespective of other bytes contained in said memory block. When a byte or bit is set, it cannot be changed until the whole memory block is emptied. The emptying of a memory block is a remarkably slower operation than the reading of data from the memory block. In this embodiment, the resulting speed problem is solved so that the changed data is written in another, already emptied memory block, in which case the earlier used memory block only needs to be emptied after the file update and/or as a background operation of the file update.

Figure 3a illustrates the situation prior to the update. The memory block 301 contains the ending location 303 of the payload data (D0) 302 of said sequential file. The ending location 303 is followed by the metadata (M0) 305 corresponding to the situation before the update. The area of memory space 306 can be free. The memory block 307 is an emptied memory block that is located in a different spot of the address space than the memory block 301. The memory blocks 301 and 307 can be located adjacently or at a distance, so that in between the memory blocks 301 and 307, there are one or several memory blocks.

Figure 3b illustrates the situation after the update. The sequential file is updated by writing in the memory block 307:
- the payload data 302 (D0) contained in the memory block 301;
- the payload data (D1) 308 to be added in the sequential file, after the payload data 302, and
- the metadata (M1) 310 associated with the updated sequential file in succession to the added ending location of the payload data 311.

The memory block 301 is commanded to be emptied. Advantageously the emptying is carried out as a background operation, apart from the above described update operation.

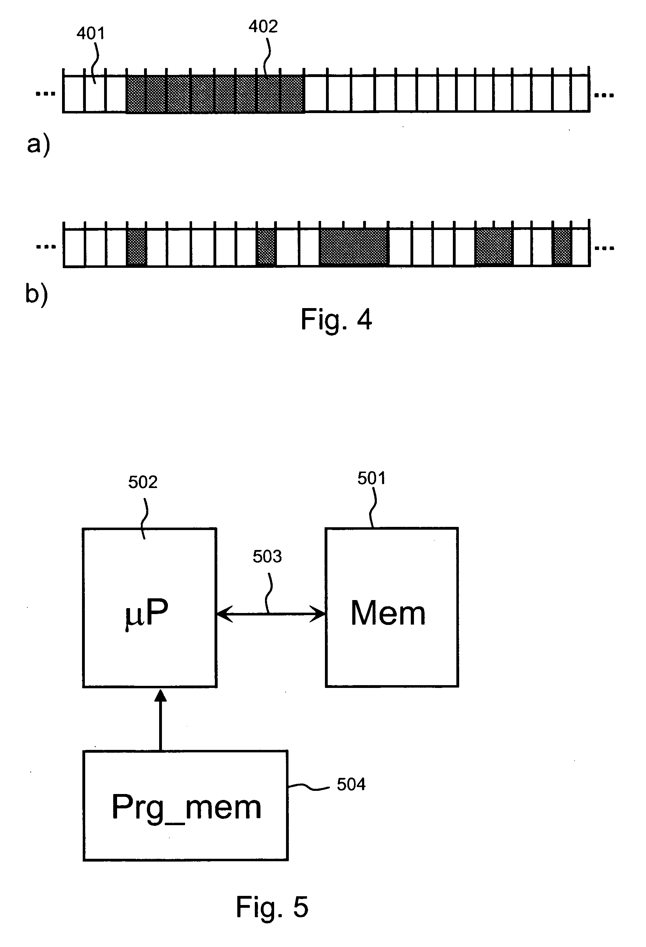

Figures 4a and 4b illustrate as diagrams in principle the saving of a sequential file stored in a block-type memory device in methods according to embodiments of the invention. In the situation illustrated in Figure 4a, the memory blocks containing said sequential file are located in succession in the address space of the block-type memory device. One square represents a memory block, for example the square referred to by number 401. The darkened area 402 represents those memory blocks that contain said sequential file. In the situation illustrated in Figure 4b, the memory blocks containing said sequential file, which are illustrated as darkened in figure 4b, are distributed in the address space of the block-type memory device. Figures 4a and 4b illustrate the location in principle of only one sequential file in the memory space of the block-type memory. In practical systems, one block-type memory device contains several stored sequential files.

In an embodiment of the invention, individual files can be reached by means of a hierarchical index structure. A root level index contains a list of the next level indexes and the logical addresses where each index can be found. If a name included in the index does not represent an index, said name represents a file, and the connected logical address refers to the metadata of said file. If metadata is in the update process transferred to a different memory block, also the logical address referring to said metadata is updated in the working memory of the system.

Figure 5 illustrates an apparatus according to an embodiment of the invention for processing a sequential file. The apparatus includes a block-type memory device 501 for saving said sequential file and a processor 502 that is arranged to write the metadata associated with said sequential file in that memory block of said block-type memory device that contains the ending location of the payload data of said sequential file. In between the processor 502 and the memory device, there is arranged a bus 503 through which the processor and the memory device communicate.

In an apparatus according to an embodiment of the invention, said block-type memory device 501 is a flash-type microcircuit memory.

In an apparatus according to an embodiment of the invention, said block-type memory device 501 is a magnetic disc.

In an apparatus according to an embodiment of the invention, said processor 502 is arranged to update said sequential file by writing the payload data to be added in the sequential file and the metadata associated with the sequential file in that memory block of said block-type memory device that contains the ending location of the payload data of said sequential file.

In an apparatus according to an embodiment of the invention, said processor 502 is arranged to update said sequential file by commanding that memory block in said memory device that contains the ending location of the payload data of said sequential file prior to the update to be emptied, and by writing the payload data contained in said memory block, the payload data to be added in the sequential file and the metadata associated with the updated sequential file in another memory block of said block-type memory device.

In an apparatus according to an embodiment of the invention, said processor 502 is arranged to select those memory blocks that contain said sequential file to be located in succession in the address space of said block-type memory device.

In an apparatus according to an embodiment of the invention, said processor 502 is arranged to select those memory blocks that contain said sequential file, to be distributed in the address space of said block-type memory device.

In an apparatus according to an embodiment of the invention, said processor 502 is a programmable processor and the apparatus is provided with a memory device 504 for storing a computer program that controls the processor. In an apparatus according to an alternative embodiment of the invention, said processor 502 has an inner memory for storing the computer program controlling the processor. In an apparatus according to another alternative embodiment of the invention, said processor 502 is a device based on one or several ASIC circuits (Application Specific Integrated Circuits) and/or FPGA components (Field Programmable Gate Array), and the operational control of the device is based on connections between logical gates, in which case a computer program is not needed.

A computer program according to an embodiment of the invention includes software means, such as subroutines and functions, for controlling the processor 502 in order to write the metadata associated with the sequential file in that memory block of the block-type memory device that contains the ending location of the payload data contained in the sequential file.

For a man skilled in the art, the invention and its various embodiments are obviously not restricted to the above described exemplary embodiments, but the invention and its embodiments can be varied within the scope of the independent claim.

## Claims

1. A method for updating a sequential file stored in a block-type memory device and being a file that is updated by additions attached at the end of the file, the method comprising writing metadata (106) associated with said sequential file in a memory block of said block-type memory device, the memory block containing an ending location (104) of payload data (103) contained in said sequential file, the metadata being related to handling the sequential file in the block-type memory device, and the metadata expressing at least one of the following: the time of last update of the file, conditions on which the payload data is allowed to be read, conditions on which the payload data is allowed to be changed, the method further comprises:
- commanding the memory block (301) of said block-type memory device that contains the ending location (303) of the payload data contained in said sequential file prior to the update, to be emptied, and
- writing (i) the payload data (302) contained in said memory block, (ii) payload data (308) to be added in the sequential file, and (iii) metadata (310) associated with the updated sequential file in another memory block (307) of said block-type memory device.

2. A method according to claim 1, **characterized in that** those memory blocks that contain said sequential file are located in succession in an address space of said block-type memory device.

3. A method according to claim 1, **characterized in that** those memory blocks that contain said sequential file are located in an address space of said block-type memory device in a distributed manner.

4. An apparatus for updating a sequential file that is a file that is updated by additions attached at the end of the file, the apparatus comprising:
- a block-type memory device (501) for storing said sequential file, and
- a processor (502) arranged to write metadata associated with said sequential file in a memory block of the block-type memory device, the memory block containing an ending location of payload data contained in said sequential file, the metadata being related to handling the sequential file in the block-type memory device, and the metadata expressing at least one of the following: the time of last update of the file, conditions on which the payload data is allowed to be read, conditions on which the payload data is allowed to be changed,
said processor is further arranged to:
- command the memory block of the block-type memory device that contains the ending location of the payload data contained in said sequential file prior to the update, to be emptied, and
- write (i) the payload data contained in said memory block, (ii) payload data to be added in the sequential file, and (iii) metadata associated with the updated sequential file in another memory block of said block-type memory device.

5. An apparatus according to claim 4, **characterized in that** said block-type memory device is a flash-type microcircuit memory.

6. An apparatus according to claim 4, **characterized in that** said block-type memory device is a magnetic disc.

7. An apparatus according to claim 4, **characterized in that** said processor is arranged to select those memory blocks that contain said sequential file to be located in succession in an address space of said block-type memory space.

8. An apparatus according to claim 4, **characterized in that** said processor is arranged to select those memory blocks that contain said sequential file to locate in an address space of said block-type memory device in a distributed manner.

9. An apparatus according to claim 4, **characterized in that** said processor is a programmable processor and the apparatus includes a memory device for storing a computer program for controlling the processor.

10. A computer program for updating a sequential file stored in a block-type memory device and being a file that is updated by additions attached at the end of the file, the computer program comprising software means for instructing a programmable processor to:
- write metadata associated with said sequential file in a memory block of said block-type memory device, the memory block containing an ending location of payload data contained in said sequential file, the metadata being related to handling the sequential file in the block-type memory device, and the metadata expressing at least one of the following: the time of last update of the file, conditions on which the payload data is allowed to be read, conditions on which the payload data is allowed to be changed,
the computer program further comprises software means for instructing the programmable processor to:
- command the memory block of the block-type memory device that contains the ending location of the payload data contained in said sequential file prior to the update, to be emptied, and
- write (i) the payload data contained in said memory block, (ii) payload data to be added in the sequential file, and (iii) metadata associated with the updated sequential file in another memory block of said block-type memory device.

## Patentansprüche

1. Verfahren zum Updaten einer sequentiellen Datei, die in einer Block-artigen Speichervorrichtung gespeichert ist, und eine Datei ist, welche durch Hinzufügungen, welche an das Ende der Datei angehängt werden, upgedatet wird, wobei das Verfahren das Schreiben von Metadaten (106) in einen Speicherblock der Block-artigen Speichervorrichtung umfasst, welche der sequentiellen Datei zugeordnet sind, wobei der Speicherblock eine Endposition (104) von Nutzlastdaten (103) enthält, die in der sequentiellen Datei enthalten sind, wobei die Metadaten mit der Behandlung der sequentiellen Datei in der Block-artigen Speichervorrichtung in Bezug stehen, und die Metadaten wenigstens eines der Folgenden ausdrücken: die Zeit des letzten Updates der Datei, Bedingungen unter welchen die Nutzlastdaten gelesen werden dürfen, Bedingungen unter welchen die Nutzlastdaten geändert werden dürfen, wobei das Verfahren ferner umfasst:
- Anweisen des Speicherblocks (301) der Block-artigen Speichervorrichtung, der die Endposition (303) der Nutzlastdaten enthält, die in der sequentiellen Datei vor dem Update enthalten sind, geleert zu werden, und
- Schreiben (i) der Nutzlastdaten (302), die sich in dem Speicherblock befinden, (ii) von Nutzlastdaten (308), die zu der sequentiellen Datei hinzugefügt werden sollen, und (iii) von Metadaten (310), die der upgedateten sequentiellen Datei in einem anderen Speicherblock (307) der Block-artigen Speichervorrichtung zugeordnet sind.

2. Verfahren nach Anspruch 1, **dadurch gekennzeichnet, dass** jene Speicherblöcke, welche die sequentielle Datei enthalten, sich in Abfolge in einem Adressraum der Block-artigen Speichervorrichtung befinden.

3. Verfahren nach Anspruch 1, **dadurch gekennzeichnet, dass** jene Speicherblöcke, welche die sequentielle Datei enthalten, sich in einem Adressraum der Block-artigen Speichervorrichtung in einer verteilten Art und Weise befinden.

4. Vorrichtung zum Updaten einer sequentiellen Datei, die eine Datei ist, die durch Hinzufügungen, die an das Ende der Datei angehängt werden, upgedatet wird, wobei die Vorrichtung umfasst:
- eine Block-artige Speichervorrichtung (501) zum Speichern der sequentiellen Datei, und
- einen Prozessor (502), der dazu eingerichtet ist, Metadaten, die der sequentiellen Datei zugeordnet sind, in einen Speicherblock der Block-artigen Speichervorrichtung zu schreiben, wobei der Speicherblock eine Endposition der Nutzlastdaten enthält, die in der sequentiellen Datei enthalten sind, wobei die Metadaten mit der Behandlung der sequentiellen Datei in der Block-artigen Speichervorrichtung in Bezug stehen, und die Metadaten wenigstens eines der Folgenden ausdrücken: die Zeit des letzten Updates der Datei, Bedingungen unter welchen die Nutzlastdaten gelesen werden dürfen, Bedingungen unter welchen die Nutzlastdaten geändert werden dürfen,
wobei der Prozessor ferner dazu eingerichtet ist:
- den Speicherblock der Block-artigen Speichervorrichtung, welche die Endposition der Nutzlastdaten enthält, welche in der sequentiellen Datei vor dem Update enthalten sind, anzuweisen, geleert zu werden, und
- (i) die Nutzlastdaten, die in dem Speicherblock enthalten sind, (ii) Nutzlastdaten, die zu der sequentiellen Datei hinzugefügt werden sollen, und (iii) Metadaten, die der upgedateten sequentiellen Datei in einem anderen Speicherblock der Block-artigen Speichervorrichtung zugeordnet sind, zu schreiben.

5. Vorrichtung nach Anspruch 4, **dadurch gekennzeichnet, dass** die Block-artige Speichervorrichtung ein Flash-artiger Mikroschaltkreis-Speicher ist.

6. Vorrichtung nach Anspruch 4, **dadurch gekennzeichnet, dass** die Block-artige Speichervorrichtung eine Magnetscheibe ist.

7. Vorrichtung nach Anspruch 4, **dadurch gekennzeichnet, dass** der Prozessor dazu eingerichtet ist, jene Speicherblöcke auszuwählen, welche die sequentielle Datei enthalten, welche sich in Abfolge in einem Adressraum der Block-artigen Speichervorrichtung befinden soll.

8. Vorrichtung nach Anspruch 4, **dadurch gekennzeichnet, dass** der Prozessor dazu eingerichtet ist, jene Speicherblöcke auszuwählen, welche die sequentielle Datei enthalten, welche sich in einem Adressraum der Block-artigen Speichervorrichtung in einer verteilten Art und Weise befindet.

9. Vorrichtung nach Anspruch 4, **dadurch gekennzeichnet, dass** der Prozessor ein programmierbarer Prozessor ist, und dass die Vorrichtung eine Speichervorrichtung zum Speichern eines Computerprogramms zum Steuern/Regeln des Prozessors umfasst.

10. Computerprogramm zum Updaten einer sequentiellen Datei, die in einer Block-artigen Speichervorrichtung gespeichert ist, und eine Datei ist, welche durch Hinzufügungen, die an das Ende der Datei angehängt werden, upgedatet wird, wobei das Computerprogramm Softwaremittel umfasst, um den programmierbaren Prozessor dazu anzuleiten:
- Metadaten, die der sequentiellen Datei zugeordnet sind, in einen Speicherblock der Block-artigen Speichervorrichtung zu schreiben, wobei der Speicherblock eine Endposition der Nutzlastdaten enthält, die in der sequentiellen Datei enthalten sind, wobei die Metadaten mit der Behandlung der sequentiellen Datei in der Block-artigen Speichervorrichtung in Bezug stehen, und die Metadaten wenigstens eines der Folgenden ausdrücken: die Zeit des letzten Updates der Datei, Bedingungen unter welchen die Nutzlastdaten gelesen werden dürfen, Bedingungen unter welchen die Nutzlastdaten geändert werden dürfen,
wobei das Computerprogramm ferner Softwaremittel umfasst, um den programmierbaren Prozessor dazu anzuleiten:
- den Speicherblock der Block-artigen Speichervorrichtung anzuweisen, der die Endposition der Nutzlastdaten enthält, die in der sequentiellen Datei vor dem Update enthalten sind, geleert zu werden, und
- (i) die Nutzlastdaten, die sich in dem Speicherblock befinden, (ii) Nutzlastdaten, die zu der sequentiellen Datei hinzugefügt werden sollen, und (iii) Metadaten, die der upgedateten sequentiellen Datei in einem anderen Speicherblock der Block-artigen Speichervorrichtung zugeordnet sind, zu schreiben.

## Revendications

1. Procédé de mise à jour d'un fichier séquentiel stocké dans un dispositif de mémoire du type à blocs, le fichier étant un fichier qui est mis à jour au moyen d'additions attachées en fin du fichier, le procédé comprenant l'écriture de métadonnées (106) associées audit fichier séquentiel dans un bloc mémoire dudit dispositif de mémoire du type à blocs, le bloc mémoire contenant un emplacement de fin (104) de données de charge utile (103) contenues dans ledit fichier séquentiel, les métadonnées concernant le traitement du fichier séquentiel dans le dispositif de mémoire du type à blocs, et les métadonnées exprimant au moins un parmi les suivants : l'heure de dernière mise à jour du fichier, des conditions permettant la lecture des données de charge utile, des conditions selon lesquelles il est permis de changer les données de charge utile, le procédé comprenant en outre :
la commande du bloc mémoire (301) dudit dispositif de mémoire du type à blocs qui contient l'emplacement de fin (303) des données de charge utile contenues dans ledit fichier séquentiel avant la mise à jour, destinée à être vidées, et
l'écriture (i) des données de charge utile (302) contenues dans ledit bloc mémoire, (ii) des données de charge utile (308) destinées à être ajoutées dans le fichier séquentiel, et (iii) des métadonnées (310) associées au fichier séquentiel mis à jour dans un autre bloc mémoire (307) dudit dispositif de mémoire du type à blocs.

2. Procédé selon la revendication 1, **caractérisé en ce que** les blocs de mémoire qui contiennent ledit fichier séquentiel sont situés successivement dans un espace d'adressage dudit dispositif de mémoire du type à blocs.

3. Procédé selon la revendication 1, **caractérisé en ce que** les blocs de mémoire qui contiennent ledit fichier séquentiel sont situés dans un espace d'adressage dudit dispositif de mémoire du type à blocs d'une façon repartie.

4. Appareil pour la mise à jour d'un fichier séquentiel, ce fichier étant un fichier qui est mis à jour au moyen d'additions attachées en fin du fichier, l'appareil comprenant :
un dispositif de mémoire du type à blocs (501) pour stocker ledit fichier séquentiel, et
un processeur (502) agencé pour écrire des métadonnées associées audit fichier séquentiel dans un bloc mémoire du dispositif de mémoire du type à blocs, le bloc mémoire contenant un emplacement de fin de données de charge utile contenues dans ledit fichier séquentiel, les métadonnées concernant le traitement du fichier séquentiel dans le dispositif de mémoire du type à blocs, et les métadonnées exprimant au moins un parmi les suivants : l'heure de dernière mise à jour du fichier, des conditions permettant la lecture des données de charge utile, des conditions selon lesquelles il est permis de changer les données de charge utile,
ledit processeur étant en outre agencé pour :
commander le bloc mémoire du dispositif de mémoire du type à blocs qui contient l'emplacement de fin des données de charge utile contenues dans ledit fichier séquentiel avant la mise à jour, destinée à être vidées, et
écrire (i) les données de charge utile contenues dans ledit bloc mémoire, (ii) des données de charge utile destinées à être ajoutées dans le fichier séquentiel, et (iii) des métadonnées associées au fichier séquentiel mis à jour dans un autre bloc mémoire dudit dispositif de mémoire du type à blocs.

5. Appareil selon la revendication 4, **caractérisé en ce que** ledit dispositif de mémoire du type à blocs est une mémoire à microcircuit du type flash.

6. Appareil selon la revendication 4, **caractérisé en ce que** ledit dispositif de mémoire du type à blocs est un disque magnétique.

7. Appareil selon la revendication 4, **caractérisé en ce que** ledit processeur est agencé pour sélectionner ceux parmi les blocs de mémoire qui contiennent ledit fichier séquentiel destinés à être situés successivement dans un espace d'adressage dudit espace mémoire du type à blocs.

8. Appareil selon la revendication 4, **caractérisé en ce que** ledit processeur est agencé pour sélectionner ceux parmi les blocs de mémoire qui contiennent ledit fichier séquentiel destinés à être situé dans un espace d'adressage dudit dispositif de mémoire du type à blocs d'une façon repartie.

9. Appareil selon la revendication 4, **caractérisé en ce que** ledit processeur est un processeur programmable, et l'appareil comprend un dispositif de mémoire pour stocker un programme d'ordinateur pour commander le processeur.

10. Un programme d'ordinateur pour la mise à jour d'un fichier séquentiel stocké dans un dispositif de mémoire du type à blocs, le fichier étant un fichier qui est mis à jour au moyen d'additions ajoutées en fin du fichier, le programme informatique comprenant des moyens logiciels fournissant des instructions à un processeur programmable pour :
écrire des métadonnées associées audit fichier séquentiel dans un bloc mémoire du dispositif de mémoire du type à blocs, le bloc mémoire contenant un emplacement de fin de données de charge utile contenues dans ledit fichier séquentiel, les métadonnées concernant le traitement du fichier séquentiel dans le dispositif de mémoire du type à blocs, et les métadonnées exprimant au moins un parmi les suivants : l'heure de la dernière mise à jour du fichier, des conditions permettant la lecture des données de charge utile, des conditions permettant de changer les données de charge utile,
le programme informatique comprenant en outre des moyens logiciels fournissant des instructions à un processeur programmable pour :
commander le bloc mémoire du dispositif de mémoire du type à blocs qui contient l'emplacement de fin des données de charge utile contenues dans ledit fichier séquentiel avant la mise à jour, destinée à être vidées, et
écrire (i) les données de charge utile contenues dans ledit bloc mémoire, (ii) des données de charge utile destinées à être ajoutées dans le fichier séquentiel, et (iii) lds métadonnées associées au fichier séquentiel mis à jour dans un autre bloc mémoire dudit dispositif de mémoire du type à blocs.
